(19) Europäisches Patentamt
European Patent Office
Office européen des brevets

(11) **EP 3 459 165 B1**

(12) **EUROPÄISCHE PATENTSCHRIFT**

(45) Veröffentlichungstag und Bekanntmachung des Hinweises auf die Patenterteilung:
**24.03.2021 Patentblatt 2021/12**

(21) Anmeldenummer: **16733937.3**

(22) Anmeldetag: **28.06.2016**

(51) Int Cl.:
*H02M 1/12* (2006.01)      *H02M 7/483* (2007.01)

(86) Internationale Anmeldenummer:
**PCT/EP2016/065023**

(87) Internationale Veröffentlichungsnummer:
**WO 2018/001465 (04.01.2018 Gazette 2018/01)**

(54) **UMRICHTER UND VERFAHREN ZU DESSEN BETRIEB**

CONVERTER AND METHOD FOR OPERATING SAME

CONVERTISSEUR ET PROCÉDÉ DE FONCTIONNEMENT DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.03.2019 Patentblatt 2019/13**

(73) Patentinhaber: **Siemens Energy Global GmbH & Co. KG**
**81739 München (DE)**

(72) Erfinder:
• **ANTES, Andreas**
**91358 Kunreuth (DE)**
• **PIESCHEL, Martin**
**90473 Nürnberg (DE)**

(56) Entgegenhaltungen:
EP-A1- 2 725 700      EP-A1- 2 882 089
DE-A1-102009 019 298      US-A1- 2012 314 466

EP 3 459 165 B1

**Beschreibung**

Die Erfindung bezieht sich auf ein Verfahren zum Betreiben eines Umrichters, insbesondere Multilevelumrichters, der an ein mit einer vorgegebenen Netzfrequenz arbeitendes Energieversorgungsnetz angeschlossen ist und zumindest eine Reihenschaltung mit mindestens zwei in Reihe geschalteten Teilmodulen aufweist, wobei die Teilmodule der Reihenschaltung jeweils mindestens zwei Schaltelemente und einen Energiespeicher, insbesondere Kondensator, umfassen. Ein derartiges Verfahren ist beispielsweise aus der WO 2012/152619 A2 bekannt.

Ein weiteres Verfahren zum Regeln eines Umrichters ist aus der EP 2 725 700 A1 bekannt.

Eine Eigenheit modularer Multilevelumrichter ist eine Welligkeit (fachsprachlich auch Ripple genannt) auf den Teilmodulspannungen, welche im Falle einer Dreieckschaltung die doppelte Netzfrequenz aufweist. Der Ripple bzw. die Welligkeit entsteht durch den Betrieb des Umrichters und kann nicht bzw. nicht ohne weiteres kompensiert werden. Daher verwenden in Multilevelumrichtern vorgesehene Energieregelungen, die die mittlere Teilmodulspannung auf einem vorgegebenen Sollwert halten sollen, ein Signalfilter, um den auftretenden Ripple bzw. die auftretende Welligkeit zu glätten. Ein solches Signalfilter verlangsamt jedoch den Energieregelkreis, was bei Transienten, z. B. durch Netzfehler oder abrupte Änderungen der Umrichterleistungsabgabe, in der Regel zu großen Schwankungen der Teilmodulspannungen führt. Daher wird zum Betrieb von modularen Multilevelumrichtern heutzutage überwiegend deutlich mehr Hardware in Form von Teilmodulen verbaut (ca. + 10 %) als notwendig wäre, um ein sicheres Durchfahren der Transienten zu ermöglichen.

Wird auf die beschriebene Signalfilterung der Teilmodulspannungen verzichtet, so können durch die Welligkeit bzw. durch den Ripple, der sich dann im Stellsignal der Energieregelung wiederfindet, und durch die Netzspannung unter Umständen Modulationsprodukte entstehen, die typischerweise als Stromoberschwingungen der zweiten und dritten Ordnung im Umrichter erzeugt werden. Da diese Stromoberschwingungen die Leistungshalbleiter zusätzlich belasten, wird deren Betriebsbereich deutlich eingeschränkt. Zudem muss die Einprägung dieser Oberschwingungen ins Netz aufwendig durch Passivfilter oder entsprechende Trafoschaltgruppen unterdrückt werden. Beide Maßnahmen sind kostspielig und erhöhen den Platzbedarf.

Der Erfindung liegt die Aufgabe zugrunde, ein Verfahren zum Betreiben eines Umrichters anzugeben, bei dem der oben beschriebenen Problematik der Welligkeit Rechnung getragen wird bzw. weniger deutlich zum Tragen kommt, als dies bei vorgegebenen Betriebsverfahren bzw. bei den heute kommerziell erhältlichen Umrichtern der Fall ist.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass im Rahmen des Verfahrens der Ladezustand der Energiespeicher der Teilmodule geregelt wird, und zwar unter Heranziehung eines Stellsignals, das von einem Energieregler erzeugt wird, indem ein Regelfehlersignal, das die Abweichung des jeweiligen Ladezustands der Energiespeicher von einem Ladesollwert anzeigt oder zumindest von diesem abhängig ist, unter Bildung von Regelfehlerabtastwerten mit einer Rate ausgewertet wird, die kleiner als das Vierfache der Netzfrequenz ist, und das Stellsignal in Abhängigkeit von diesen Regelfehlerabtastwerten erzeugt wird.

Ein wesentlicher Vorteil des erfindungsgemäßen Verfahrens ist darin zu sehen, dass die Energieregelung des Umrichters ohne ein Signalfilter auskommen kann, weil nämlich erfindungsgemäß das Regelfehlersignal gezielt mit einer relativ kleinen Auswertrate ausgewertet wird, wodurch der Einfluss der oben angesprochenen Welligkeit auf das Auswertergebnis und damit auf die Energieregelung sehr gering ist oder sogar völlig unterdrückt werden kann.

Das Regelfehlersignal kann zuvor seinerseits mittels Abtastwerten gebildet worden sein bzw. auf Abtastwerten beruhen oder durch Abtastwerte definiert sein; in einem solchen Fall erfolgt die Auswertung und Bildung der genannten Regelfehlerabtastwerte auf der Basis dieser zuvor erzeugten Abtastwerte. Alternativ kann es sich bei dem Regelfehlersignal auch um ein analoges Signal handeln.

Vorteilhaft ist es, wenn bei dem Verfahren für jeden Umrichterzweig des Umrichters die Schar der Teilmodulspannungen gemittelt und abhängig von der jeweiligen Netzspannung bzw. Anschlussspannung an ein Energieversorgungsnetz genau zweimal innerhalb einer Netzperiode abgetastet wird; mit anderen Worten ist es vorteilhaft, wenn das Regelfehlersignal genau mit dem Zweifachen der Netzfrequenz ausgewertet wird. Das jeweils neu berechnete Stellsignal, das die Wirkleistungsaufnahme festlegt, wird vorzugsweise verzögert ausgegeben so dass es sich erst bei dessen Stromnulldurchgang (im Falle einer Dreieckschaltung) bzw. Stromnulldurchgang des Wechselanteils (im Falle einer Doppelsterntopologie bzw. HGÜ) ändert.

Bei einer bevorzugten Ausgestaltung überwacht eine Transientenerkennungseinrichtung die Teilmodulspannungen. Überschreiten diese den jeweils zulässigen Toleranzbereich, so wird kurzzeitig auf einen schnellen Energieregler umgeschaltet. In einer weiterhin bevorzugten Ausführungsvariante ist vorgesehen, dass der zulässige Toleranzbereich betriebspunktunabhängig berechnet wird.

Vorteilhaft ist es, wenn die Modulspannungen der Teilmodule unter Bildung eines Summensignals summiert und/oder unter Bildung eines Mittelwertsignals gemittelt werden und das Regelfehlersignal durch Differenzbildung zwischen dem Summensignal und einem summenbezogenen Ladesollwert oder durch Differenzbildung zwischen dem Mittelwertsignal und einem mittelwertbezogenen Ladesollwert gebildet wird.

Bezüglich der Bildung eines Triggersignals wird es als vorteilhaft angesehen, wenn ein Triggersignalgenerator des Energiereglers die Anschlussspannung des Energieversorgungsnetzes oder einer dazu proportionalen Spannung auf Nulldurchgänge überwacht und bei jedem Nulldurchgang jeweils ein Triggersignal erzeugt, das Triggersignal um eine vorgegebene Zeitspanne verzögert und ein zeitverzögertes Triggersignal gebildet wird, eine Abtast-Halteeinrichtung des Energiereglers das Regelfehlersignal - getriggert vom zeitverzögerten Triggersignal - abtastet und ausgangsseitig zeitverzögerte Regelfehlerabtastwerte ausgibt und das Stellsignal unter Heranziehung der zeitverzögerten Regelfehlerabtastwerte erzeugt wird.

Die vorgegebene Zeitspanne ist vorzugsweise eine fest vorgegebene Zeitspanne.

Vorteilhaft ist es, wenn die fest vorgegebene Zeitspanne derart bemessen ist, dass das verzögerte Triggersignal mit einer Phasenlage zwischen 30° und 60° - bezogen auf den jeweils vorangegangenen Nulldurchgang der Anschlussspannung - , insbesondere 45°, oder zwischen 120° und 150°, insbesondere 135° erzeugt wird bzw. bei der Abtast-Halteeinrichtung eingeht.

Auch kann vorgesehen sein, dass der Energieregler die vorgegebene Zeitspanne in Abhängigkeit von den jeweiligen Betriebsparametern des Umrichters und/oder des Energieversorgungsnetzes selbst ermittelt. Die jeweils vorgegebene Zeitspanne wird vorzugsweise gemäß folgender Formel berechnet:

$$TZ = \frac{n \cdot \pi - \varphi}{2\omega}$$

wobei n eine beliebige natürliche Zahl wie beispielsweise 1 oder 2 bezeichnet, $\varphi$ die Phasenlage zwischen Spannung und Strom bezeichnet beziehungsweise das Verhältnis zwischen Wirkleistung und Blindleistung angibt und $\omega$ die Kreisfrequenz der Netzfrequenz bezeichnet.

Die Zeitspanne, um die das Triggersignal verzögert wird, wird nachfolgend auch Verzögerungszeit oder Totzeit genannt.

Die Regelfehlerabtastwerte werden vorzugsweise in ein Reglerglied des Energiereglers eingespeist, das in Abhängigkeit von den anliegenden Regelfehlerabtastwerten ein Reglersignal ausgibt.

Dem Reglerglied ist bevorzugt eine Abtast-Halteeinrichtung nachgeordnet, die das Reglersignal unter Bildung von Reglerabtastwerten abtastet und den jeweils erzeugten Reglerabtastwert bis zum Erzeugen des jeweils nächsten Reglerabtastwerts ausgangsseitig als das genannte Stellsignal des Energiereglers ausgibt.

Auch ist es von Vorteil, wenn die Triggersignale des Triggersignalgenerators in die dem Reglerglied nachgeordnete Abtast-Halteeinrichtung eingespeist werden und die dem Reglerglied nachgeordnete Abtast-Halteeinrichtung das Reglersignal jeweils bei Anliegen eines Triggersignals abtastet.

Erfindungsgemäß ist vorgesehen, dass der Betrag der Regelfehlerabtastwerte auf das Überschreiten eines Schwellenwerts hin überwacht wird und ein Auslösesignal erzeugt, wenn der Schwellenwert überschritten wird, das Auslösesignal in den Triggersignalgenerator eingespeist wird, wodurch dieser von einem Normalbetriebsmodus in einen Sonderbetriebsmodus umgeschaltet wird, der Triggersignalgenerator im Sonderbetriebsmodus als Triggersignal ein Signal erzeugt, das die dem Reglerglied vorgeordnete und die dem Reglerglied nachgeordnete Abtast-Halteeinrichtung jeweils in einen Dauerabtastbetrieb schaltet, in dem das Regelfehlersignal bzw. das Reglersignal mit einer Abtastrate, die größer als die Abtastrate im Normalbetrieb ist, abgetastet wird.

Der Schwellenwert wird bevorzugt in Abhängigkeit von Betriebsparametern ermittelt, insbesondere in Abhängigkeit von dem jeweiligen Strom in der Reihenschaltung, einer Stellgröße eines dem Energieregler nachgeordneten Stromreglers und dem genannten Mittelwertsignal.

Die Erfindung bezieht sich darüber hinaus auf einen Umrichter, insbesondere Multilevelumrichter, zum Anschluss an ein Energieversorgungsnetz mit zumindest einer Reihenschaltung mit mindestens zwei in Reihe geschalteten Teilmodulen, die jeweils mindestens zwei Schaltelemente und einen Energiespeicher, insbesondere Kondensator, umfassen.

Erfindungsgemäß ist bezüglich eines solchen Umrichters vorgesehen, dass der Umrichter einen Energieregler aufweist, der zur Steuerung des Ladezustands der Energiespeicher ausgangsseitig ein Stellsignal erzeugt, ein Triggersignalgenerator und eine Abtast-Halteeinrichtung des Energiereglers derart ausgebildet sind, dass die Abtast-Halteeinrichtung ein Regelfehlersignal, das den jeweiligen Ladezustand der Energiespeicher anzeigt oder zumindest von diesem abhängig ist, unter Bildung von Regelfehlerabtastwerten mit einer Rate auswertet, die kleiner als das Vierfache der Netzfrequenz des Energieversorgungsnetzes ist, und ein Reglerglied des Energiereglers oder eine dem Reglerglied nachgeordnete Komponente, insbesondere eine dem Reglerglied nachgeordnete Abtast-Halteeinrichtung, als das Stellsignal ein Stellsignal erzeugt, das von den Regelfehlerabtastwerten abhängig ist.

Bezüglich der Vorteile des erfindungsgemäßen Umrichters sei auf die obigen Ausführungen im Zusammenhang mit dem erfindungsgemäßen Verfahren verwiesen.

Vorzugsweise weist der Energieregler einen Triggersignalgenerator auf, der die Spannung des Energieversorgungsnetzes oder einer dazu proportionalen Spannung auf Nulldurchgänge überwacht und bei jedem Nulldurchgang jeweils ein Triggersignal erzeugt.

Der Energieregler weist bevorzugt ein Verzögerungsglied auf, das die Triggersignale jeweils um eine vorgegebene Zeitspanne verzögert und verzögerte Triggersignale bildet.

Der Energieregler weist vorzugsweise eine Abtast-Halteeinrichtung auf, die mit den verzögerten Triggersignalen beaufschlagt ist, mit diesen das Regelfehlersignal abtastet und zeitverzögerte Regelfehlerabtastwerte bildet.

Der Abtast-Halteeinrichtung ist bevorzugt ein Reglerglied nachgeordnet.

Dem Reglerglied ist vorzugsweise eine Abtast-Halteeinrichtung, nachfolgend zweite Abtast-Halteeinrichtung genannt, nachgeordnet.

Die zweite Abtast-Halteeinrichtung ist bevorzugt mit dem Reglersignal des Reglergliedes und den Triggersignalen des Triggersignalgenerators beaufschlagt.

Die zweite Abtast-Halteeinrichtung ist vorzugsweise derart ausgestaltet, dass sie das Reglersignal des Reglergliedes jeweils bei Anliegen eines Triggersignals des Triggersignalgenerators unter Bildung eines Reglerabtastwerts abtastet und den jeweils erzeugten Reglerabtastwert bis zum Erhalt des jeweils nächsten Triggersignals des Triggersignalgenerators ausgangsseitig als das genannte Stellsignal des Energiereglers ausgibt.

Die Erfindung wird nachfolgend anhand von Ausführungsbeispielen näher erläutert; dabei zeigen beispielhaft

Figur 1     eine Anordnung mit einem Multilevelumrichter, der eine Umrichtereinheit und eine die Umrichtereinheit ansteuernde Ansteuereinheit umfasst,

Fig. 2     ein Ausführungsbeispiel für eine Umrichtereinheit für den Multilevelumrichter gemäß Figur 1 näher im Detail,

Figur 3     ein weiteres Ausführungsbeispiel für eine Umrichtereinheit für den Multilevelumrichter gemäß Figur 1,

Figur 4     ein Ausführungsbeispiel für Phasenmodule, die bei den Umrichtereinheiten gemäß den Figuren 2 und 3 eingesetzt werden können,

Figur 5     ein Ausführungsbeispiel für ein Teilmodul, das bei dem Phasenmodul gemäß Figur 4 eingesetzt werden kann,

Figur 6     ein Ausführungsbeispiel für ein Schaltmodul, das bei dem Teilmodul gemäß Figur 5 eingesetzt werden kann,

Figur 7     ein Ausführungsbeispiel für ein Kondensatormodul, das bei dem Teilmodul gemäß Figur 5 eingesetzt werden kann,

Figur 8     ein Ausführungsbeispiel für eine Ansteuereinheit, die bei dem Multilevelumrichter gemäß Figur 1 eingesetzt werden kann,

Figur 9     ein Ausführungsbeispiel für einen Energieregler, der bei der Ansteuereinheit gemäß Figur 8 eingesetzt werden kann,

Figur 10     ein Ausführungsbeispiel für einen Triggersignalgenerator, der bei dem Energieregler gemäß Figur 9 eingesetzt werden kann,

Figur 11     ein Ausführungsbeispiel für eine Nulldurchgangserkennungseinrichtung, die bei dem Triggersignalgenerator gemäß Figur 10 und 15 eingesetzt werden kann,

Figur 12     ein Ausführungsbeispiel für eine Transientenerkennungseinrichtung, die bei dem Energieregler gemäß Figur 9 eingesetzt werden kann,

Figur 13     beispielhaft Spannungsverläufe zur Erläuterung der Arbeitsweise der Ansteuereinheit gemäß Figur 1,

Figur 14     ein weiteres Ausführungsbeispiel für ein Schaltmodul, das bei dem Teilmodul gemäß Figur 5 eingesetzt werden kann, und

Figur 15     ein weiteres Ausführungsbeispiel für einen Triggersignalgenerator, der bei dem Energieregler gemäß Figur 9 eingesetzt werden kann.

In den Figuren werden der Übersicht halber für identische oder vergleichbare Komponenten stets dieselben Bezugszeichen verwendet.

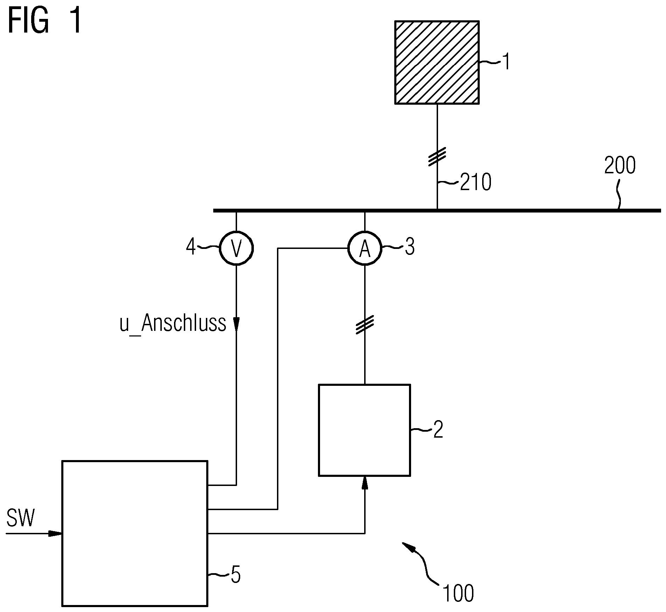

Die Figur 1 zeigt eine Anordnung mit einem Multilevelumrichter 100, der über eine mehrphasige, insbesondere dreiphasige, Anschlussschiene 200 und eine mehrphasige, insbesondere dreiphasige, Anschlussleitung 210 an ein mehrphasiges, insbesondere dreiphasiges Energieversorgungsnetz 1 angeschlossen ist.

Der Multilevelumrichter 100 umfasst eine Umrichtereinheit 2, die von einer Ansteuereinheit 5 angesteuert wird. Zur Ansteuerung verwertet die Ansteuereinheit 5 Messwerte eines Strommessers 3, die den in die Anschlussschiene 200 hineinfließenden Strom bzw. den aus der Anschlussschiene 200 in den Multilevelumrichter 100 fließenden Strom angeben, Messwerte eines Spannungsmessers 4, die die am Multilevelumrichter 100 anliegende Spannung angeben, sowie externe Sollwerte SW, die eine betriebsmäßig gewünschte Arbeitsweise des Multilevelumrichters 100 beschreiben.

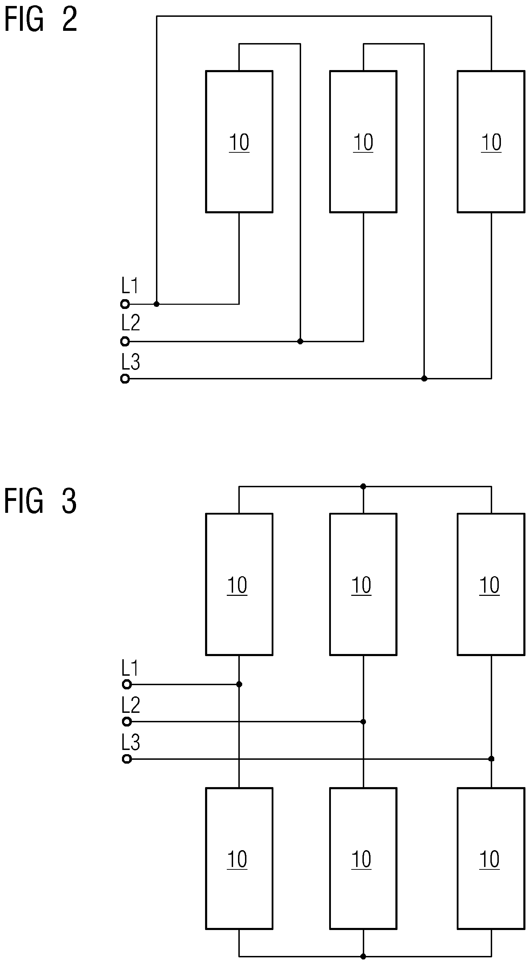

Die Figur 2 zeigt ein Ausführungsbeispiel für eine Umrichtereinheit 2, die bei dem Multilevelumrichter 100 gemäß Figur 1 eingesetzt werden kann. Die Umrichtereinheit 2 umfasst drei Phasenmodule 10, die im Dreieck verschaltet sind. Die Phasenanschlüsse der Umrichtereinheit 2 sind in der Figur 2 mit den Bezugszeichen L1, L2 und L3 gekennzeichnet.

Die Figur 3 zeigt ein weiteres Ausführungsbeispiel für eine Umrichtereinheit 2, die bei dem Multilevelumrichter 100 gemäß Figur 1 eingesetzt werden kann. Die Umrichtereinheit 2 umfasst sechs Phasenmodule 10, die in einer Doppelsternanordnung verschaltet sind. Die Phasenanschlüsse der Umrichtereinheit 2 sind in der Figur 3 mit den Bezugszeichen L1, L2 und L3 gekennzeichnet.

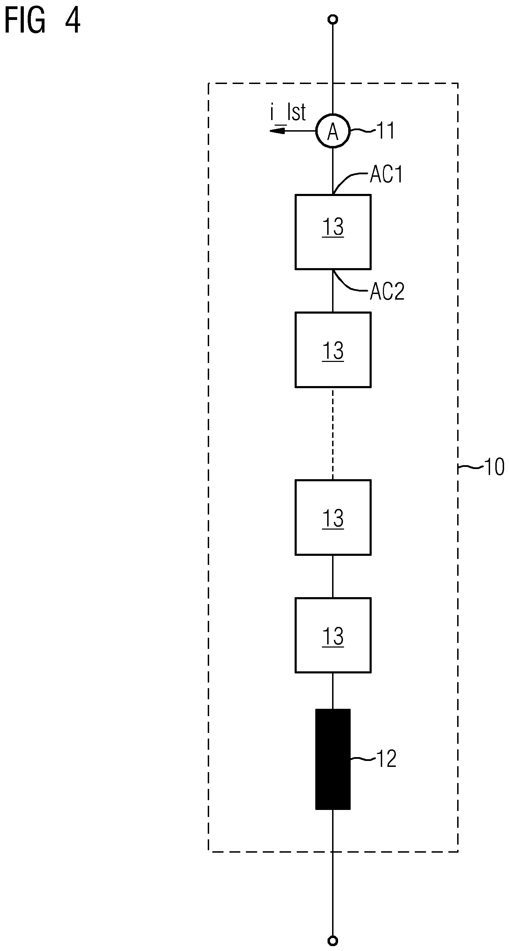

Die Figur 4 zeigt ein Ausführungsbeispiel für ein Phasenmodul 10, das bei den Umrichtereinheiten 2 gemäß den Figuren 2 und 3 eingesetzt werden kann. Das Phasenmodul 10 umfasst einen Phasenstromsensor 11, eine Koppelinduktivität 12 sowie eine Vielzahl an Teilmodulen 13, die in Reihe geschaltet sind bzw. elektrisch eine Reihenschaltung bilden. Die zur Bildung dieser elektrischen Reihenschaltung herangezogenen elektrischen Anschlüsse der Teilmodule 13 sind in der Figur 4 mit den Bezugszeichen AC1 und AC2 gekennzeichnet.

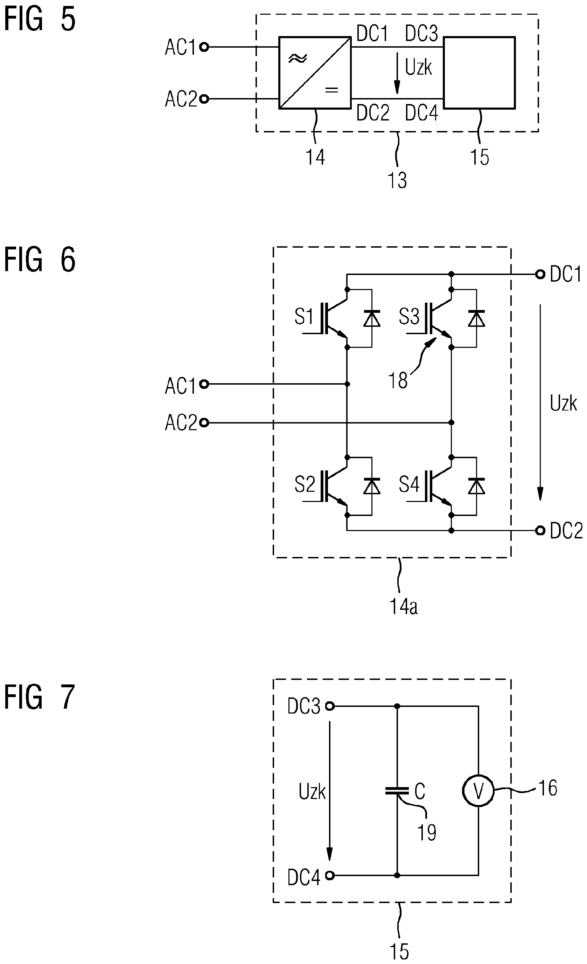

Die Figur 5 zeigt ein Ausführungsbeispiel für ein Teilmodul 13, das zur Bildung des Phasenmoduls 10 gemäß Figur 4 eingesetzt werden kann. Das Teilmodul 13 gemäß Figur 5 umfasst ein Schaltmodul 14 sowie einen nachgeordneten Energiespeicher in Form eines Kondensatormoduls 15.

Die in der Figur 5 linken Anschlüsse des Schaltmoduls 14 bilden die äußeren Anschlüsse AC1 und AC2 des Teilmoduls 13 gemäß Figur 4. Ausgangsseitig, und zwar an Anschlüssen DC1 und DC2, sind an das Schaltmodul 14 Anschlüsse DC3 und DC4 des Kondensatormoduls 15 angeschlossen.

Die Figur 6 zeigt ein Ausführungsbeispiel für ein Schaltmodul 14, das bei dem Teilmodul 13 gemäß Figur 5 eingesetzt werden kann. Das Schaltmodul 14 gemäß Figur 6 umfasst vier Schaltelemente S1, S2, S3 und S4, die in einer Brückenschaltung 18 miteinander verschaltet sind.

Die Mittenanschlüsse der Brückenschaltung 18 bilden die Anschlüsse AC1 und AC2 des Teilmoduls 13 gemäß den Figuren 4 und 5.

Die äußeren Anschlüsse DC1 und DC2 der Brückenschaltung 18 bilden die inneren Anschlüsse DC1 und DC2 des Teilmoduls 13 gemäß Figur 5, an die das Kondensatormodul 15 mit seinen Anschlüssen DC3 und DC4 angeschlossen ist. Die an den Anschlüssen DC1 und DC2 anliegende Zwischenkreisspannung ist in der Figur 6 mit dem Bezugszeichen Uzk gekennzeichnet. Diese Zwischenkreisspannung Uzk liegt als Eingangsspannung an dem Kondensatormodul 15 gemäß Figur 5 an.

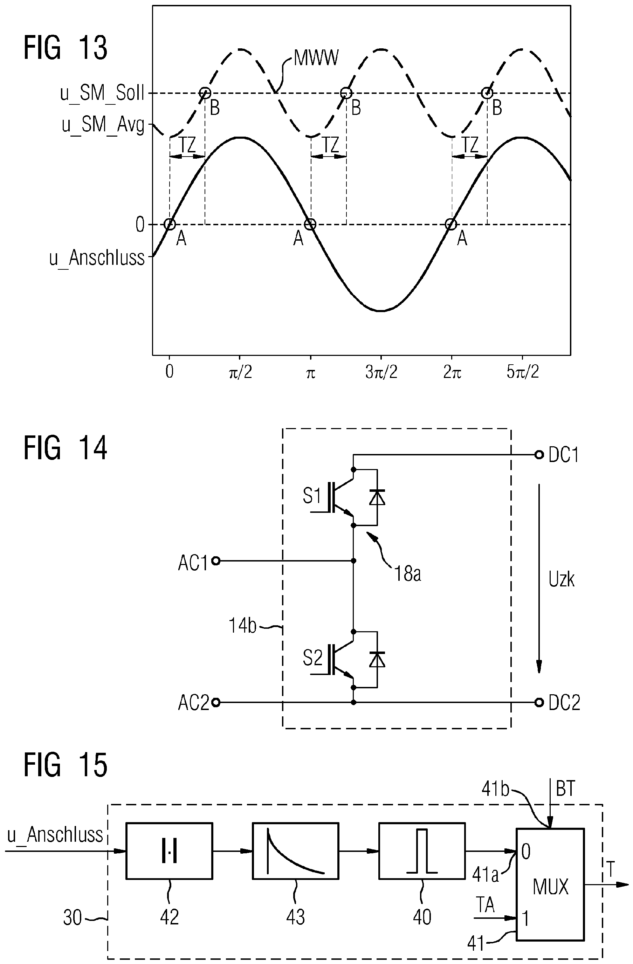

Die Figur 14 zeigt ein weiteres Ausführungsbeispiel für ein Schaltmodul 14, das bei dem Teilmodul 13 gemäß Figur 5 eingesetzt werden kann. Das Schaltmodul 14 gemäß Figur 6 umfasst lediglich zwei Schaltelemente S1 und S2, die in einer Reihenschaltung 18a miteinander verschaltet sind. Der Mittenanschluss der Reihenschaltung 18a bildet den Anschlusse AC1 des Teilmoduls 13 gemäß den Figuren 4 und 5. Die äußeren Anschlüsse DC1 und DC2 der Reihenschaltung 18a bilden die inneren Anschlüsse DC1 und DC2 des Teilmoduls 13 gemäß Figur 5, an die das Kondensatormodul 15 mit den seinen Anschlüssen DC3 und DC4 angeschlossen ist.

Die Figur 7 zeigt ein Ausführungsbeispiel für ein Kondensatormodul 15, das bei dem Teilmodul 13 gemäß Figur 5 eingesetzt werden kann. Das Kondensatormodul 15 umfasst einen Kondensator 19 sowie eine dazu parallel geschaltete Kondensatorspannungsmesseinrichtung 16. An dem Kondensator 19 sowie an der Kondensatorspannungsmesseinrichtung 16 liegt die bereits erwähnte Zwischenkreisspannung Uzk an.

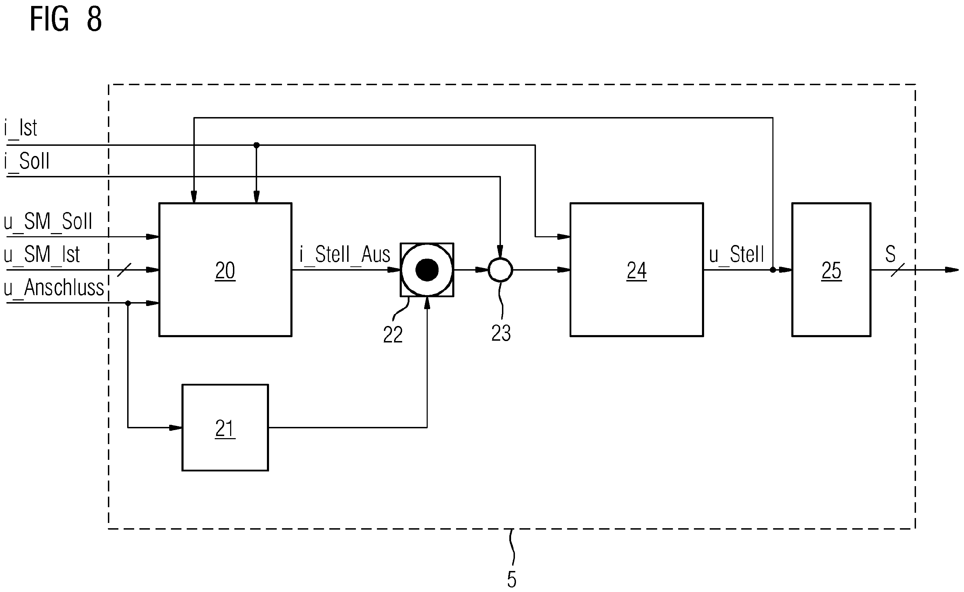

Die Figur 8 zeigt ein Ausführungsbeispiel für eine Ansteuereinheit 5, die bei dem Multilevelumrichter 100 gemäß Figur 1 eingesetzt werden kann. Die Ansteuereinheit 5 umfasst einen Energieregler 20, einen Sinusgenerator 21, einen Multiplikator 22, einen Summierer 23, einen Stromregler 24 sowie einen Pulsmustergenerator 25.

Die Komponenten der Ansteuereinheit 5 gemäß Figur 8 können beispielsweise wie folgt betrieben werden:

Der Energieregler 20 berechnet - für jedes Phasenmodul 10 der Umrichtereinheit 2 - jeweils aus

- einer Sollvorgabe für die mittlere Teilmodulspannung u_SM_Soll (die Sollvorgabe kann auch als mittelwertbezogener Ladesollwert der Teilmodule bezeichnet werden),
- den mittels der mit den Kondensatorspannungsmesseinrichtungen 16 gemäß Figur 7 gemessenen Teilmodulspannungen u_SM_Ist (entsprechen den Zwischenkreisspannungen Uzk in den Figuren 5 bis 7),
- der mittels des Spannungsmessers 4 gemäß Figur 1 gemessenen Anschlussspannung u_Anschluss,
- dem mittels des Phasenstrommessers 11 gemäß der Figur 4 gemessenen Phasenmodulstrom i_Ist und
- dem vom Stromregler 24 berechneten Stellsignal (bzw. Stellgröße) u_Stell
  ein Stellsignal i_Stell_Aus zum Stabilisieren der mittleren Teilmodulspannung.

Das Stellsignal i_Stell Aus wird zusammen mit dem Ausgabesignal des Sinusgenerators 21 mittels des Multiplikators 22 multipliziert.

Das Ausgabesignal des Multiplikators 22 wird mit einem extern zugeführten Sollwert I_Soll mittels des Summierers 23 summiert. Diese Summe wird als Sollgröße zusammen mit dem mittels des Phasenstrommessers 11 gemäß Figur 4 gemessenen Phasenmodulstrom i_Ist dem Stromregler 24 zugeführt. Bei dem Stromregler 24 kann es sich beispielsweise um einen sogenannten PI-Regler handeln.

Das vom Stromregler 24 berechnete Stellsignal u_Stell wird dem Pulsmustergenerator 25 zugeführt, der die einzelnen Schaltbefehle S für die Teilmodule 13 gemäß Figur 4 berechnet. Bezüglich möglicher Ausgestaltungen für die Pulsmustergenerierung seitens des Pulsmustergenerators 25 sei beispielhaft auf die Druckschrift WO 2008/086760 A1 verwiesen, die eine phasenverschobene Pulsweitenmodulation offenbart.

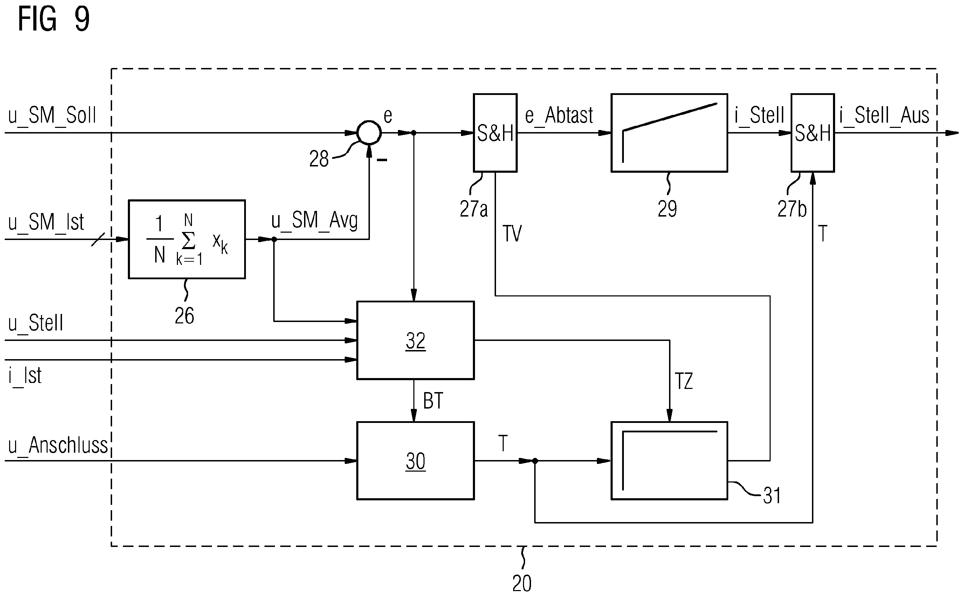

Die Figur 9 zeigt ein Ausführungsbeispiel für einen Energieregler 20, der bei der Ansteuereinheit 5 gemäß Figur 8 eingesetzt werden kann. Der Energieregler 20 gemäß Figur 9 umfasst einen Mittelwertbildner 26, einen Soll-Istwert-Vergleicher 28, eine erste Abtast-Halteeinrichtung 27a, ein der ersten Abtast-Halteeinrichtung 27a nachgeordnetes Reglerglied 29, eine dem Reglerglied 29 nachgeordnete zweite Abtast-Halteeinrichtung 27b, eine Transientenerkennungseinrichtung 32, einen Triggersignalgenerator 30 sowie ein Verzögerungsglied 31.

Die Komponenten des Energiereglers 20 gemäß Figur 9 können beispielsweise wie folgt betrieben werden:

In dem Energieregler 20 werden die einzelnen mittels der Kondensatorspannungsmesseinrichtungen 16 gemäß Figur 7 gemessenen Teilmodulspannungen der Teilmodule des jeweiligen Phasenmoduls 10 dem Mittelwertbildner 26 zugeführt, der eine die mittlere Teilmodulspannung u_SM_Avg angebendes Mittelwertsignal ermittelt und ausgibt.

Die mittlere Teilmodulspannung u_SM_Avg wird zusammen mit dem Sollwert für die mittlere Teilmodulspannung u_SM_Soll (mittelwertbezogener Ladesollwert) dem Soll-Istwert-Vergleicher 28 zugeführt, der ein Regelfehlersignal, nachfolgend kurz Regelfehler e genannt, berechnet.

Der Regelfehler e wird der ersten Abtast-Halteeinrichtung 27a zugeführt, die als Ausgabesignal zeitverzögerter Regelfehlerabtastwerte e_Abtast erzeugt; die erste Abtast-Halteeinrichtung 27a wird zu diesem Zwecke von einem um eine vorgegebene Zeitspanne, die nachfolgend auch Totzeit oder Verzögerungszeit TZ genannt wird, verzögerten Triggersignal Tv gesteuert bzw. getriggert. Die zeitverzögerten Regelfehlerabtastwerte e_Abtast werden in das Reglerglied 29, bei dem es sich beispielsweise um einen PI-Regler handelt, eingespeist. Das Reglerglied 29 wiederum berechnet ein Reglersignal i_Stell.

Das Reglersignal i_Stell wird von der zweiten Abtast-Halteeinrichtung 27b abgetastet, die als Ausgangssignal Reglerabtastwerte erzeugt, die das oben erwähnte Stellsignal i_Stell_Aus des Energiereglers 20 bilden.

Die Signale u_SM_Avg, e, u_Stell und i_Ist werden der Transientenerkennungseinrichtung 32 zugeführt, die die vorgegebene Zeitspanne bzw. die anzuwendende Verzögerungszeit TZ (auch Totzeit genannt) bestimmt. Die Transientenerkennungseinrichtung 32 erzeugt außerdem ein Transientensignal BT, wenn eine Transiente erkannt wurde.

Die Transientenerkennungseinrichtung 32 stellt die Verzögerungszeit TZ entweder fest ein oder in Abhängigkeit von den jeweiligen Betriebsbedingungen.

Falls die Transientenerkennungseinrichtung 32 die Verzögerungszeit TZ fest einstellt, dann vorzugsweise so, dass das verzögerte Triggersignal Tv mit einer Phasenlage zwischen 30° und 60° - bezogen auf den jeweils vorangegangenen Nulldurchgang der Anschlussspannung u_Anschluss -, insbesondere 45°, oder zwischen 120° und 150°, insbesondere 135°, bei der ersten Abtast-Halteeinrichtung 27a eintrifft.

Falls die Transientenerkennungseinrichtung 32 die Verzögerungszeit TZ in Abhängigkeit von den jeweiligen Betriebsbedingungen einstellt, dann berechnet sie die Verzögerungszeit TZ vorzugsweise gemäß folgender Formel:

$$\mathrm{TZ} \; = \; \frac{n \cdot \pi - \varphi}{2\omega}$$

wobei n eine beliebige natürliche Zahl wie beispielsweise 1 oder 2 bezeichnet, $\varphi$ die Phasenlage zwischen Spannung und Strom bezeichnet beziehungsweise das Verhältnis zwischen Wirkleistung und Blindleistung angibt und $\omega$ die Kreisfrequenz der Netzfrequenz bezeichnet.

In dem Triggersignalgenerator 30 wird mit der gemessenen Anschlussspannung u_Anschluss, die vom Spannungsmesser 4 gemäß Figur 1 erzeugt wird, und dem Transientensignal BT der Transientenerkennungseinrichtung 32, ein Triggersignal T erzeugt, das der ersten Abtast-Halteeinrichtung 27a und dem Verzögerungsglied 31 zugeführt wird.

Das Verzögerungsglied 31 verzögert das Triggersignal T in Abhängigkeit von der einzustellenden Verzögerungszeit (Totzeit) TZ, die von der Transientenerkennungseinrichtung 32 vorgegeben wird, und führt das entsprechend verzögerte Triggersignal Tv der ersten Abtast-Halteeinrichtung 27a zu.

Weitere Ausführungen zur Arbeitsweise des Energiereglers 20 folgen weiter unten im Zusammenhang mit der Figur 13; zunächst werden zum besseren Verständnis weitere Teilkomponenten des Energiereglers 20 näher erläutert.

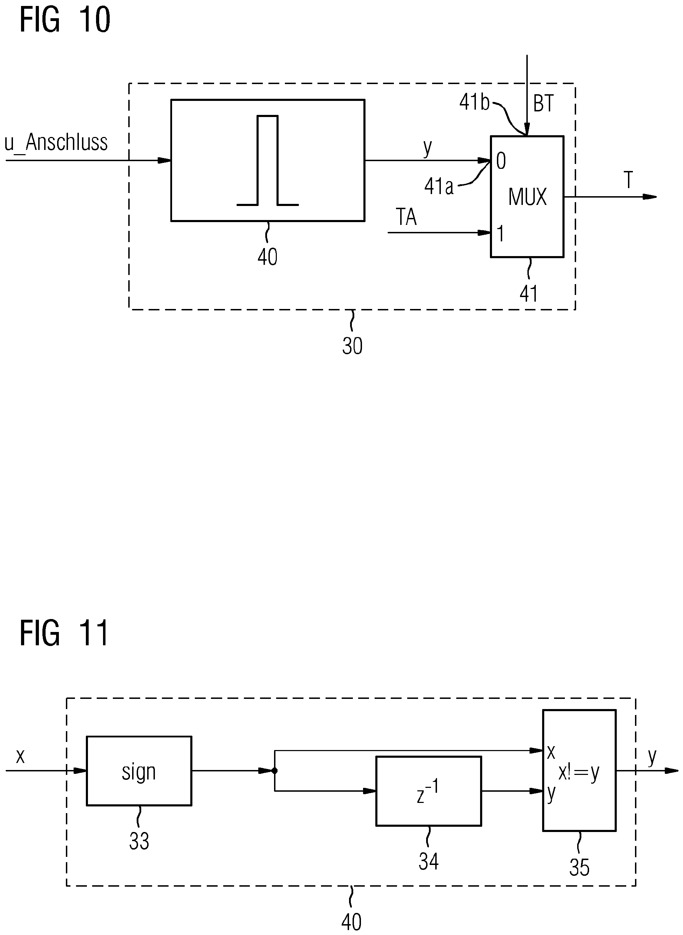

Die Figur 10 zeigt ein Ausführungsbeispiel für einen Triggersignalgenerator 30, der bei dem Energieregler 20 gemäß Figur 9 eingesetzt werden kann. Der Triggersignalgenerator 30 gemäß Figur 10 umfasst eine Nulldurchgangserkennungseinrichtung 40 sowie einen Multiplexer 41.

Die Figur 10 zeigt den Triggersignalgenerator 30 zum Zeitpunkt eines Nulldurchganges der Anschlussspannung u_Anschluss, die vom Spannungsmesser 4 gemäß Figur 1 gemessen wird und der Nulldurchgangserkennungseinrichtung 40 zugeführt wird. Das Ausgangssignal der Nulldurchgangserkennungseinrichtung 40 wird in einen Eingang 41a des Multiplexers 41 eingespeist.

In Abhängigkeit davon, ob an einem anderen Eingang 41b des Multiplexers 41 das Transientensignal BT anliegt oder nicht, wird als Triggersignal T des Triggersignalgenerators entweder permanent ein periodisches Taktsignal TA des Triggersignalgenerators 30 durchgeschaltet oder jeweils nur ein einzelner Teilpuls des Taktsignals TA, wenn bzw. sobald jeweils seitens der Nulldurchgangserkennungseinrichtung 40 ein Nulldurchgang erkannt und ein Nulldurchgangssignal y in den Eingang 41a des Multiplexers 41 eingespeist wurde. Die Taktfrequenz des Taktsignals TA beträgt beispielsweise 25,6 kHz.

Die Figur 15 zeigt ein weiteres Ausführungsbeispiel für einen Triggersignalgenerator 30, der bei dem Energieregler 20 gemäß Figur 9 eingesetzt werden kann. Bei dem Triggersignalgenerator 30 gemäß Figur 15 sind zusätzlich zu der Nulldurchgangserkennungseinrichtung 40 und dem nachgeordneten Multiplexer 41 ein Absolutwertbildner 42 sowie ein DT1-Glied 43 vorhanden, die der Nulldurchgangserkennungseinrichtung 40 vorgeordnet sind.

Der Absolutwertbildner 42 bildet von der Anschlussspannung u_Anschluss einen Absolutwert, der in das DT1-Glied 43 eingespeist wird; das DT1-Glied 43 kann beispielsweise eine Zeitkonstante von 2 ms haben. Das Ausgangssignal des DT1-Gliedes 43 wird der Nulldurchgangserkennungseinrichtung 40 zugeführt, deren Ausgangssignal wiederum in den Multiplexer 41 eingespeist wird. In Abhängigkeit davon, ob seitens der Transientenerkennungseinrichtung 32 gemäß Figur 9 das Transientensignal BT erzeugt wurde oder nicht, wird als Triggersignal T entweder permanent das Taktsignal TA ausgegeben oder nur jeweils ein Teilpuls des Taktsignals TA, wenn bzw. sobald die Nulldurchgangserkennungseinrichtung 40 einen Nulldurchgang erkannt hat.

Die Figur 11 zeigt ein Ausführungsbeispiel für eine Nulldurchgangserkennungseinrichtung 40, die bei den Triggersignalgeneratoren 30 gemäß Figur 10 und 15 eingesetzt werden kann.

Die Nulldurchgangserkennungseinrichtung 40 weist eingangsseitig einen Signum-(bzw. Vorzeichen-)Funktionsbildner 33, einen Verzögerungsblock 34 sowie einen Komparator 35 auf. Von dem Eingangssignal, bei dem es sich um die Anschlussspannung u_Anschluss handelt, wird mit dem Signum-Funktionsbildner 33 ein das Vorzeichen angebender Vorzeichenwert gebildet. Der Vorzeichenwert wird in dem Komparator 35 mit einem durch den Verzögerungsblock 34 um einen Abtastwert verzögerten Vorzeichenwert verglichen. In Abhängigkeit von dem Vergleichsergebnis des Komparators 35 wird auf einen Nulldurchgang geschlossen und das Nulldurchgangssignal y erzeugt, das von dem nachgeordneten Multiplexer 41 gemäß den Figuren 10 und 15 ausgewertet werden kann; konkret wird auf einen Nulldurchgang geschlossen, wenn am Komparator 35 unterschiedliche Vorzeichenwerte anliegen bzw. dem Komparator 35 unterschiedliche Vorzeichen angezeigt werden.

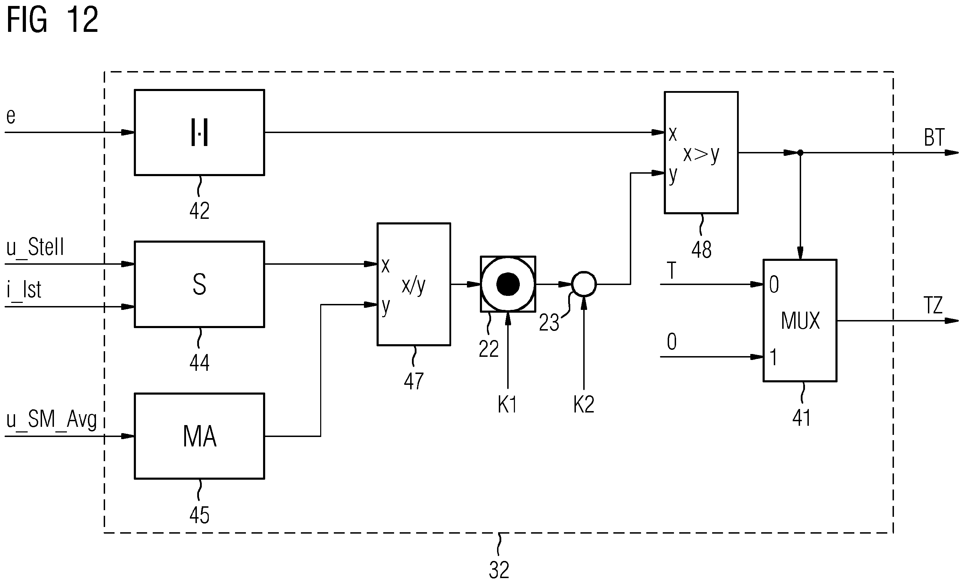

Die Figur 12 zeigt ein Ausführungsbeispiel für die Transientenerkennungseinrichtung 32 des Energiereglers 20 gemäß Figur 9.

Die Transientenerkennungseinrichtung 32 gemäß Figur 12 weist einen Absolutwertbildner 42, einen Scheinleistungsbildner 44, ein Tiefpassfilter 45, einen Quotientenbildner 47, einen Multiplikator 22, einen Summierer 23, einen Komparator 48 sowie einen Multiplexer 41 auf. Die Komponenten der Transientenerkennungseinrichtung 32 gemäß Figur 12 können beispielsweise wie folgt betrieben werden:

Aus dem Phasenmodulstrom i_Ist und dem Stellsignal u_Stell wird in dem Scheinleistungsbildner 44 die momentane Scheinleistung berechnet. Dies kann beispielsweise in der Weise erfolgen, wie dies in dem Buch "Leistungselektronische Schaltungen, Funktion, Auslegung und Anwendung" (Dierk Schröder, Springer Verlag, 2. Auflage, Seiten 983 ff.) dargelegt ist.

Aus der mittleren Teilmodulspannung u_SM_Avg wird mit dem Tiefpassfilter 45 oder alternativ einem in der Figur 12 nicht gezeigten gleitenden Mittelwertbildner der jeweilige Gleichanteil berechnet und in den Quotientenbildner 47 eingespeist. Alternativ könnte anstatt der mittleren Teilmodulspannung u_SM_Ist auch der Sollwert der mittleren Teilmodulspannung u_SM_Soll in den Quotientenbildner 47 eingespeist werden.

Aus der berechneten Scheinleistung und dem von dem Tiefpassfilter 45 gebildeten Gleichanteil wird mittels des Quotientenbildners 47 ein Quotient gebildet, der mittels des Multiplikators 22 mit einem Verstärkungsfaktor K1 multipliziert wird. Anschließend wird mit dem Summierer 23 eine Konstante K2 addiert.

Das Ergebnis, das vom Summierer 23 ausgegeben wird, ist ein Schwellenwert, mit dem der Absolutwert des Regelfehlers e, der vom Absolutwertbildner 42 erzeugt wird, verglichen wird. Überschreitet der Absolutwert eine vorgegebene Schwelle, so wird eine Transiente erkannt, und es wird das Transientensignal BT erzeugt. In einem solchen Fall wird die Verzögerungszeit bzw. Totzeit TZ (vgl. auch Figur 9) von dem Triggersignal T des Triggersignalgenerators 30 auf 0, d. h. Durchgriff, umgeschaltet.

Die Wahl der Konstanten K1 und K2 wird vorzugsweise in Abhängigkeit von der jeweiligen Umrichterkonfiguration eingestellt und kann beispielsweise simulativ oder experimentell ermittelt bzw. optimiert werden.

Bei einem Umrichter in Dreieckschaltung, wie er in Figur 2 gezeigt wird, ist bei Verwendung des Triggersignalgenerators 30 gemäß Figur 10 eine Verzögerungszeit bzw. Totzeit TZ für das Triggersignal T von 0,75 $\pi$ (relativ zur Phasenlage der Anschlussspannung u_Anschluss) und bei Verwendung des Triggersignalgenerators 30 gemäß Figur 15 von 0,5 $\pi$ besonders gut geeignet. Für die Ausführung als Doppelsternschaltung gemäß Figur 3 ist die Totzeit TZ abhängig vom jeweiligen Leistungsfaktor (cos $\varphi$).

Die Figur 13 zeigt beispielhaft die Arbeitsweise des Energiereglers 20 gemäß Figur 9 anhand von Spannungssignalen über der Zeit; nachfolgend wird daher auf beide Figuren 9 und 13 Bezug genommen.

Es lässt sich die Anschlussspannung u_Anschluss erkennen, die über der Zeit sinusförmig ist und zu Zeitpunkten A Nulldurchgänge aufweist. Im Falle eines jeden Nulldurchgangs der Anschlussspannung u_Anschluss wird von dem Triggersignalgenerator 30 ein Triggersignal T erzeugt, das von dem Verzögerungsglied 31 um die Verzögerungszeit TZ verzögert wird und als verzögertes Triggersignal Tv zur ersten Abtast-Halteeinrichtung 27a gelangt.

Die erste Abtast-Halteeinrichtung 27a tastet den Regelfehler e somit zeitlich verzögert ab, und zwar zeitlich derart verzögert ab, dass zum Zeitpunkt B der Abtastung die gemittelte Teilmodulspannung u_SM_Avg ihren zeitlichen Mittelwert MWW aufweist, der - so das Ziel der Energieregelung durch den Energieregler 20 - möglichst mit der gewünschten mittleren Teilmodulspannung u_SM_Soll (auch mittelwertbezogener Ladesollwert genannt) identisch sein soll. Die in der gemittelten Teilmodulspannung u_SM_Avg vorhandene Restwelligkeit bzw. der eingangs erwähnte Ripple spielt für die Regelung des Energiereglers 20 keine Rolle, weil die Welligkeit der gemittelten Teilmodulspannung u_SM_Avg wegen des Abtastens zum "richtigen" Zeitpunkt in den Abtastwerten e Abtast gezielt verloren geht. Der "richtige" Zeitpunkt wird jeweils bestimmt durch den Zeitpunkt A des Nulldurchgangs der Anschlussspannung u_Anschluss verzögert um die Verzögerungszeit TZ des Verzögerungsgliedes 31.

Mit anderen Worten wird es durch die Verzögerungszeit TZ möglich, den Mittelwert MWW der Teilmodulspannung u_SM_Avg mit einer Auswertfrequenz von lediglich dem Zweifachen der Netzfrequenz der Anschlussspannung zu ermitteln, und dies mit maximaler Geschwindigkeit. Konkret ermöglicht es die beschriebene Vorgehensweise, den Mittelwert MWW mit einer Abtastrate zu ermitteln, die die vom Shannon-Theorem geforderte Mindestabtastrate (> 2-mal Netzfrequenz) für einen vollständigen Informationsgewinn aus einem Signal mit Netzfrequenz nicht erreicht.

Sind die zeitverzögerten Regelfehlerabtastwerte e_Abtast ungleich Null, weil der zeitliche Mittelwert MWW der gemittelten Teilmodulspannung u_SM_Avg von der gewünschten mittleren Teilmodulspannung u_SM_Soll abweicht, so erzeugt das Reglerglied 29 ein entsprechendes Reglersignal i_Stell. Dieses Reglersignal i_Stell wird von der zweiten Abtast-Halteeinrichtung 27b abgetastet, und zwar gesteuert bzw. getriggert von dem unverzögerten Triggersignals T.

Die zweite Abtast-Halteeinrichtung 27b tastet das Reglersignal i_Stell unter Bildung von Reglerabtastwerten i_Stell_Aus ab und gibt den jeweils erzeugten Reglerabtastwert i_Stell_Aus bis zum Erzeugen des jeweils nächsten Reglerabtastwerts i_Stell Aus ausgangsseitig als das Stellsignal des Energiereglers 20 aus.

Zu einem Umschalten der Betriebsart kommt es, wenn die Transientenerkennungseinrichtung 32 das Transientensignal BT erzeugt, das ein Auslösesignal zum Auslösen des Umschaltens der Betriebsmodi bildet.

Die Transientenerkennungseinrichtung 32 überwacht hierzu den Betrag der Regelfehlerabtastwerte e auf das Überschreiten eines Schwellenwerts und erzeugt als Auslösesignal das Transientensignal BT, wenn der Schwellenwert überschritten wird (siehe hierzu Komparator 48 in Figur 12 und die Erläuterungen im Zusammenhang mit der Figur 12).

Das Transientensignal BT wird in den Triggersignalgenerator 30 eingespeist, wodurch dieser von seinem Normalbetriebsmodus in seinen Sonderbetriebsmodus umgeschaltet wird. Der Triggersignalgenerator 30 erzeugt im Sonderbetriebsmodus als das Triggersignal T ein Signal, das die Abtast-Halteeinrichtung 27a und die Abtast-Halteeinrichtung 27b jeweils in einen Dauerabtastbetrieb schaltet, in dem das Regelfehlersignal e bzw. das Reglersignal i_Stell mit einer Abtastrate, die größer als die Abtastrate im Normalbetrieb ist, abgetastet wird. Bei dem Ausführungsbeispiel gemäß den Figuren 1 bis 15 erfolgt das Abtasten im Dauerabtastbetrieb mit der Taktfrequenz TA des Taktgenerators 30 (vgl. Figuren 10 und 15), beispielsweise also mit einer Frequenz von 25,6 kHz. Ein Vorteil des Sonderbetriebsmodus besteht somit darin, dass im Falle einer Transiente das Abtasten des Regelfehlers e und das Erzeugen der zeitverzögerten Regelfehlerabtastwerte e_Abtast sowie das Abtasten des Reglersignals i_Stell und das Bilden des Stellsignals i_Stell_Aus mit einer deutlichen höheren Frequenz als dem Zweifachen der Netzfrequenz (wie im Normalbetriebsmodus) erfolgt und somit der Verlauf der Transienten gut erfasst werden kann.

Im Sonderbetriebsmodus wird die Verzögerungszeit bzw. Totzeit TZ vorzugsweise auf Null bzw. auf einen möglichst minimalen Wert geschaltet.

Die im Zusammenhang mit den Figuren 1 - 15 dargestellten Ausführungsformen können einzelne oder mehrere der folgenden Eigenschaften bzw. Vorteile aufweisen:

- Die Energieregelung verursacht im stationären Betrieb keine Stromoberschwingungen durch Modulationsprodukte, ohne die Regeldynamik zu verschlechtern. Damit können die hardwareseitigen Betriebsgrenzen des Umrichters besser genutzt werden. Die Netzrückwirkungen werden verringert.
- Durch die beschriebene Unterabtastung der Teilmodulspannungen ist keine zusätzliche Signalfilterung nötig.
- Die beschriebene Transientenerkennung zur temporären Umschaltung ermöglicht eine schnelle Regelung.
- Die verzögerte Ausgabe des Stellsignals vermeidet abrupte Stromänderungen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Betreiben eines Umrichters, insbesondere Multilevelumrichters (100), der an ein mit einer vorgegebenen Netzfrequenz arbeitendes Energieversorgungsnetz (1) angeschlossen ist und zumindest eine Reihenschaltung mit mindestens zwei in Reihe geschalteten Teilmodulen (13) aufweist, wobei die Teilmodule (13) der Reihenschaltung jeweils mindestens zwei Schaltelemente (S1-S4) und einen Energiespeicher, insbesondere Kondensator (19), umfassen, **dadurch gekennzeichnet, dass** im Rahmen des Verfahrens der Ladezustand der Energiespeicher der Teilmodule (13) geregelt wird, und zwar unter Heranziehung eines Stellsignals (i_Stell_Aus), das von einem Energieregler (20) erzeugt wird, indem

   - ein Regelfehlersignal (e), das die Abweichung des jeweiligen Ladezustands der Energiespeicher von einem Ladesollwert (u_SM_Soll) anzeigt oder zumindest von diesem abhängig ist, unter Bildung von Regelfehlerabtastwerten (e_Abtast) mit einer Rate ausgewertet wird, die kleiner als das Vierfache der Netzfrequenz ist, und
   das Stellsignal (i_Stell_Aus) in Abhängigkeit von diesen Regelfehlerabtastwerten (e_Abtast) erzeugt wird,
   - wobei der Betrag der Regelfehlerabtastwerte (e_Abtast) auf das

      Überschreiten eines Schwellenwerts hin überwacht wird und ein Auslösesignal (BT) erzeugt, wenn der Schwellenwertüberschritten wird,
      das Auslösesignal (BT) in den Triggersignalgenerator (30)

   - eingespeist wird, wodurch dieser von einem Normalbetriebsmodus in einen Sonderbetriebsmodus umgeschaltet wird,
   der Triggersignalgenerator (30) im Sonderbetriebsmodus als Triggersignal (T) ein Signal erzeugt, das die dem Reglerglied (29) vorgeordnete und die dem Reglerglied (29) nachgeordnete Abtast-Halteeinrichtung (27a, 27b)) jeweils in einen Dauerabtastbetrieb schaltet, in dem das Regelfehlersignal (e) bzw. das Reglersignal (i_Stell) mit einer Abtastrate, die größer als die Abtastrate im Normalbetrieb ist, abgetastet wird.

2. Verfahren nach Anspruch 1,
   **dadurch gekennzeichnet, dass** das Regelfehlersignal (e) mit dem Zweifachen der Netzfrequenz ausgewertet wird.

3. Verfahren nach einem der voranstehenden Ansprüche,
   **dadurch gekennzeichnet, dass**

      - die Modulspannungen der Teilmodule (13) unter Bildung eines Summensignals summiert und/oder unter Bildung eines Mittelwertsignals (u_SM_Avg) gemittelt werden und
      - das Regelfehlersignal (e) durch Differenzbildung zwischen dem Summensignal und einem summenbezogenen Ladesollwert oder durch Differenzbildung zwischen dem Mittelwertsignal (u_SM_Avg) und einem mittelwertbezogenen Ladesollwert (u_SM_Soll) gebildet wird.

4. Verfahren nach einem der voranstehenden Ansprüche,
   **dadurch gekennzeichnet, dass**

      - ein Triggersignalgenerator (30) des Energiereglers (20) die Anschlussspannung (u_Anschluss) des Energieversorgungsnetzes (1) oder einer dazu proportionalen Spannung auf Nulldurchgänge überwacht und bei jedem Nulldurchgang jeweils ein Triggersignal (T) erzeugt,
      - das Triggersignal (T) um eine vorgegebene Zeitspanne (TZ) verzögert und ein zeitverzögertes Triggersignal (Tv) gebildet wird,
      - eine Abtast-Halteeinrichtung (27a) des Energiereglers (20) das Regelfehlersignal (e) - getriggert vom zeitverzögerten Triggersignal (Tv) - abtastet und ausgangsseitig zeitverzögerte Regelfehlerabtastwerte (e_Abtast) ausgibt und
      - das Stellsignal (i_Stell_Aus) unter Heranziehung der zeitverzögerten Regelfehlerabtastwerte (e_Abtast) erzeugt wird.

5. Verfahren nach Anspruch 4,
   **dadurch gekennzeichnet, dass** die vorgegebene Zeitspanne (TZ) eine fest vorgegebene Zeitspanne (TZ) ist.

6. Verfahren nach Anspruch 4 oder 5,
   **dadurch gekennzeichnet, dass**
   die fest vorgegebene Zeitspanne (TZ) derart bemessen ist, dass das verzögerte Triggersignal mit einer Phasenlage zwischen 30° und 60° - bezogen auf den jeweils vorangegangenen Nulldurchgang der Anschlussspannung -, insbesondere 45°, oder zwischen 120° und 150°, insbesondere 135° erzeugt wird bzw. bei der Abtast-Halteeinrichtung eingeht.

**7.** Verfahren nach einem der voranstehenden Ansprüche,
**dadurch gekennzeichnet, dass**
der Energieregler (20) die vorgegebene Zeitspanne (TZ) in Abhängigkeit von Betriebsparametern des Umrichters und/oder des Energieversorgungsnetzes (1) selbst ermittelt.

**8.** Verfahren nach einem der voranstehenden Ansprüche,
**dadurch gekennzeichnet, dass**
die Regelfehlerabtastwerte (e_Abtast) in ein Reglerglied (29) des Energiereglers (20) eingespeist werden, das in Abhängigkeit von den anliegenden Regelfehlerabtastwerten (e_Abtast) ein Reglersignal (i_Stell) ausgibt.

**9.** Verfahren nach Anspruch 8,
**dadurch gekennzeichnet, dass**
dem Reglerglied (29) eine Abtast-Halteeinrichtung (27b) nachgeordnet ist, die das Reglersignal (i_Stell) unter Bildung von Reglerabtastwerten abtastet und den jeweils erzeugten Reglerabtastwert bis zum Erzeugen des jeweils nächsten Reglerabtastwerts ausgangsseitig als das genannte Stellsignal (i_Stell_Aus) des Energiereglers (20) ausgibt.

**10.** Verfahren nach einem der voranstehenden Ansprüche,
**dadurch gekennzeichnet, dass**

- die Triggersignale (T) des Triggersignalgenerators (30) in die dem Reglerglied (29) nachgeordnete Abtast-Halteeinrichtung (27b) eingespeist werden und
- die dem Reglerglied (29) nachgeordnete Abtast-Halteeinrichtung (27b) das Reglersignal (i_Stell) jeweils bei Anliegen eines Triggersignals (T) abtastet.

**11.** Verfahren nach Anspruch 10,
**dadurch gekennzeichnet, dass**
der Schwellenwert in Abhängigkeit von Betriebsparametern ermittelt wird, insbesondere in Abhängigkeit von dem jeweiligen Strom (i_Ist) in der Reihenschaltung, einer Stellgröße (u_Stell) eines dem Energieregler (20) nachgeordneten Stromreglers (24) und dem genannten Mittelwertsignal (u_SM_Avg).

**12.** Umrichter, insbesondere Multilevelumrichter (100), zum Anschluss an ein Energieversorgungsnetz (1) mit zumindest einer Reihenschaltung mit mindestens zwei in Reihe geschalteten Teilmodulen (13), die jeweils mindestens zwei Schaltelemente (S1-S4) und einen Energiespeicher, insbesondere Kondensator (19), umfassen,
**dadurch gekennzeichnet, dass**

- der Umrichter einen Energieregler (20) aufweist, der zur Steuerung des Ladezustands der Energiespeicher ausgangsseitig ein Stellsignal (i_Stell_Aus) erzeugt,
- ein Triggersignalgenerator (30) und eine Abtast-Halteeinrichtung (27a) des Energiereglers (20) derart ausgebildet sind, dass die Abtast-Halteeinrichtung (27a) ein Regelfehlersignal (e), das den jeweiligen Ladezustand der Energiespeicher anzeigt oder zumindest von diesem abhängig ist, unter Bildung von Regelfehlerabtastwerten (e_Abtast) mit einer Rate auswertet, die kleiner als das Vierfache der Netzfrequenz des Energieversorgungsnetzes (1) ist, und
- ein Reglerglied (29) des Energiereglers (20) oder eine dem Reglerglied (29) nachgeordnete Komponente, insbesondere eine dem Reglerglied (29) nachgeordnete Abtast-Halteeinrichtung (27b), als das Stellsignal (i_Stell_Aus) ein Signal erzeugt, das von den Regelfehlerabtastwerten (e_Abtast) abhängig ist,
- wobei der Betrag der Regelfehlerabtastwerte (e_Abtast) auf das Überschreiten eines Schwellenwerts hin überwacht wird und ein Auslösesignal (BT) erzeugt, wenn der Schwellenwert überschritten wird,
- das Auslösesignal (BT) in den Triggersignalgenerator (30) eingespeist wird, wodurch dieser von einem Normalbetriebs modus in einen Sonderbetriebsmodus umgeschaltet wird,
- der Triggersignalgenerator (30) derart eingerichtete ist, dass er im Sonderbetriebsmodus als Triggersignal (T) ein Signal erzeugt, das die dem Reglerglied (29) vorgeordnete und die dem Reglerglied (29) nachgeordnete Abtast-Halteeinrichtung (27a, 27b)) jeweils in einen Dauerabtastbetrieb schaltet, in dem das Regelfehlersignal (e) bzw. das Reglersignal (i_Stell) mit einer Abtastrate, die größer als die Abtastrate im Normalbetrieb ist, abgetastet wird.

**13.** Umrichter nach Anspruch 12,
**dadurch gekennzeichnet, dass**

- der Energieregler (20) einen Triggersignalgenerator (30) aufweist, der die Spannung des Energieversorgungsnetzes (1) oder einer dazu proportionalen Spannung auf Nulldurchgänge überwacht und bei jedem Nulldurchgang jeweils ein Triggersignal (T) erzeugt,
- der Energieregler (20) ein Verzögerungsglied (31) aufweist, das die Triggersignale (T) jeweils um eine vorgegebene Zeitspanne (TZ) verzögert und verzögerte Triggersignale (Tv) bildet,
- der Energieregler (20) eine Abtast-Halteeinrichtung (27a) aufweist, die mit den verzögerten Triggersignalen (Tv) beaufschlagt ist, mit diesen das Regelfehlersignal (e) abtastet und zeitverzögerte Regelfehlerabtastwerte (e_Abtast) bildet,

- der Abtast-Halteeinrichtung (27a) ein Reglerglied (29) nachgeordnet ist,

- dem Reglerglied (29) eine Abtast-Halteeinrichtung (27b), nachfolgend zweite Abtast-Halteeinrichtung (27b) genannt, nachgeordnet ist,

- die zweite Abtast-Halteeinrichtung (27b) mit dem Reglersignal (i_Stell) des Reglergliedes und den Triggersignalen (T) des Triggersignalgenerators (30) beaufschlagt ist und

- die zweite Abtast-Halteeinrichtung (27a) derart ausgestaltet ist, dass sie

    - das Reglersignal (i_Stell) des Reglergliedes jeweils bei Anliegen eines Triggersignals (T) des Triggersignalgenerators (30) unter Bildung eines Reglerabtastwerts abtastet und

    - den jeweils erzeugten Reglerabtastwert bis zum Erhalt des jeweils nächsten Triggersignals (T) des Triggersignalgenerators (30) ausgangsseitig als das genannte Stellsignal (i_Stell_Aus) des Energiereglers (20) ausgibt.

## Claims

1. Method for operating a converter, in particular a multilevel converter (100), that is connected to an energy supply grid (1) operating at a predetermined grid frequency and has at least one series circuit having at least two submodules (13) connected in series, wherein the submodules (13) of the series circuit each comprise at least two switching elements (S1-S4) and an energy store, in particular a capacitor (19), **characterized in that** the state of charge of the energy stores of the submodules (13) is controlled in the course of the method, specifically using a regulating signal (i_Stell_Aus) that is generated by an energy controller (20), by

    - evaluating a control error signal (e) that indicates the deviation of the respective state of charge of the energy stores from a setpoint charge value (u_SM_Soll) or is at least dependent thereon, with formation of control error samples (e_Abtast), at a rate that is less than four times the grid frequency, and generating the regulating signal (i_Stell_Aus) depending on said control error samples (e_Abtast),

    - wherein the absolute value of the control error samples (e_Abtast) is monitored for a threshold value being exceeded and generates a triggering signal (BT) when the threshold value is exceeded,

- feeding the triggering signal (BT) into the trigger signal generator (30), as a result of which the latter is switched over from a normal operating mode into a special operating mode, the trigger signal generator (30) generates a signal in the special operating mode as a trigger signal (T), which switches the sample-and-hold device (27a, 27b) arranged upstream of the controller element (29) and arranged downstream of the controller element (29) in each case into continuous sampling operation in which the control error signal (e) or the controller signal (i_Stell) is sampled at a sampling rate that is greater than the sampling rate in normal operation.

2. Method according to Claim 1,
**characterized in that**
the control error signal (e) is evaluated at twice the grid frequency.

3. Method according to either of the preceding claims,
**characterized in that**

    - the module voltages of the submodules (13) are summed, forming a sum signal, and/or are averaged, forming an average value signal (u_SM_Avg), and

    - the control error signal (e) is formed by forming the difference between the sum signal and a sum-based setpoint charge value or by forming the difference between the average value signal (u_SM_Avg) and an average value-based setpoint charge value (u_SM_Soll).

4. Method according to one of the preceding claims,
**characterized in that**

    - a trigger signal generator (30) of the energy controller (20) monitors the connection voltage (u_Anschluss) of the energy supply grid (1) or a voltage proportional thereto for zero crossings and generates a respective trigger signal (T) at each zero crossing,

    - the trigger signal (T) is delayed by a predetermined time period (TZ) and a time-delayed trigger signal (Tv) is formed,

    - a sample-and-hold device (27a) of the energy controller (20) samples the control error signal (e), in a manner triggered by the time-delayed trigger signal (Tv), and outputs time-delayed control error samples (e_Abtast) at the output, and

    - the regulating signal (i_Stell_Aus) is generated using the time-delayed control error samples (e_Abtast).

5. Method according to Claim 4,

**characterized in that**
the predetermined time period (TZ) is a fixedly predetermined time period (TZ).

6. Method according to Claim 4 or 5,
**characterized in that**
the fixedly predetermined time period (TZ) is proportioned in such a way that the delayed trigger signal is generated and/or is received by the sample-and-hold device with a phase angle between 30° and 60°, in particular 45°, or between 120° and 150°, in particular 135°, based on the previous zero crossing of the connection voltage in each case.

7. Method according to one of the preceding claims,
**characterized in that**
the energy controller (20) ascertains the predetermined time period (TZ) depending on operating parameters of the converter and/or of the energy supply grid (1) itself.

8. Method according to one of the preceding claims,
**characterized in that**
the control error samples (e_Abtast) are fed into a controller element (29) of the energy controller (20), which controller element outputs a controller signal (i_Stell) depending on the control error samples (e_Abtast) that are present.

9. Method according to Claim 8,
**characterized in that**
a sample-and-hold device (27b) is arranged downstream of the controller element (29), samples the controller signal (i_Stell), forming controller samples, and outputs the respectively generated controller sample until the respective next controller sample is generated at the output as the said regulating signal (i_Stell_Aus) from the energy controller (20) .

10. Method according to one of the preceding claims,
**characterized in that**

- the trigger signals (T) from the trigger signal generator (30) are fed into the sample-and-hold device (27b) arranged downstream of the controller element (29) and
- the sample-and-hold device (27b) arranged downstream of the controller element (29) samples the controller signal (i_Stell) whenever a trigger signal (T) is present.

11. Method according to Claim 10,
**characterized in that**
the threshold value is ascertained depending on operating parameters, in particular depending on the respective current (i_Ist) in the series circuit, a manipulated variable (u_Stell) of a current controller (24) arranged downstream of the energy controller (20) and the said average value signal (u_SM_Avg).

12. Converter, in particular multilevel converter (100), for connection to an energy supply grid (1) having at least one series circuit having at least two submodules (13) which are connected in series and each comprise at least two switching elements (S1-S4) and an energy store, in particular a capacitor (19),
**characterized in that**

- the converter has an energy controller (20) that generates a regulating signal (i_Stell_Aus) at the output in order to control the state of charge of the energy stores,
- a trigger signal generator (30) and a sample-and-hold device (27a) of the energy controller (20) are designed in such a way that the sample-and-hold device (27a) evaluates a control error signal (e) that indicates the respective state of charge of the energy stores or is at least dependent thereon, with formation of control error samples (e_Abtast), at a rate that is less than four times the grid frequency of the energy supply grid (1), and
- a controller element (29) of the energy controller (20) or a component arranged downstream of the controller element (29), in particular a sample-and-hold device (27b) arranged downstream of the controller element (29), generates a signal as the regulating signal (i_Stell_Aus) that is dependent on the control error samples (e_Abtast),
- wherein the absolute value of the control error samples (e_Abtast) is monitored for a threshold value being exceeded and generates a triggering signal (BT) when the threshold value is exceeded,
- the triggering signal (BT) is fed into the trigger signal generator (30), as a result of which the latter is switched over from a normal operating mode into a special operating mode,
- the trigger signal generator (30) is configured in such a way that it generates a signal in the special operating mode as a trigger signal (T), which switches the sample-and-hold device (27a, 27b) arranged upstream of the controller element (29) and arranged downstream of the controller element (29) in each case into continuous sampling operation in which the control error signal (e) or the controller signal (i_Stell) is sampled at a sampling rate that is greater than the sampling rate in normal operation.

13. Converter according to Claim 12,
**characterized in that**

- the energy controller (20) has a trigger signal generator (30) that monitors the voltage of the energy supply grid (1) or a voltage proportional thereto for zero crossings and generates a respective trigger signal (T) at each zero crossing,
- the energy controller (20) has a delay element (31) that delays the trigger signals (T) in each case by a predetermined time period (TZ) and forms delayed trigger signals (Tv),
- the energy controller (20) has a sample-and-hold device (27a) to which the delayed trigger signals (Tv) are applied, which samples the control error signal (e) with said trigger signals, and which forms time-delayed control error samples (e_Abtast),
- a controller element (29) is arranged downstream of the sample-and-hold device (27a),
- a sample-and-hold device (27b), hereinafter referred to as a second sample-and-hold device (27b), is arranged downstream of the controller element (29),
- the controller signal (i_Stell) from the controller element and the trigger signals (T) from the trigger signal generator (30) are applied to the second sample-and-hold device (27b), and
- the second sample-and-hold device (27a) is configured in such a way that it

- samples the controller signal (i_Stell) from the controller element whenever a trigger signal (T) from the trigger signal generator (30) is present, forming a controller sample and
- outputs the respectively generated controller sample until the respective next trigger signal (T) from the trigger signal generator (30) is received at the output as the said regulating signal (i_Stell_Aus) from the energy controller (20) .

**Revendications**

1. Procédé pour faire fonctionner un onduleur, notamment un onduleur (100) à plusieurs niveaux, qui est connecté à un réseau (1) d'alimentation en électricité fonctionnant à une fréquence de réseau donnée à l'avance et ayant au moins un circuit série d'au moins deux modules (13) partiels montés en série, les modules (13) partiels du circuit série comprenant chacun au moins deux éléments (S1 à S4) de coupure et un accumulateur d'énergie, notamment un condensateur (19), **caractérisé en ce que** dans le cadre du procédé, on règle l'état de charge des accumulateurs d'énergie des modules (13) partiels et cela en tirant parti d'un signal (i_Stell_Aus) de réglage, qui est produit par un régleur (20) d'énergie, par le fait que

- on exploite un signal (e) d'erreur de réglage, qui indique l'écart de l'état de charge respectif de l'accumulateur d'énergie à une valeur (u_SM_Soll) de consigne de charge ou au moins qui en dépend, en formant des valeurs (e_Abtast) d'échantillonnage d'erreur de réglage à une cadence, qui est plus petite que le quadruple de la fréquence du réseau, et on produit le signal (i_Stell_Aus) de réglage en fonction de ces valeurs (e_Abtast) d'échantillonnage d'erreur de réglage, dans lequel on contrôle le dépassement d'une valeur de seuil par la valeur absolue des valeurs (e_Abbtast) d'échantillonnage d'erreur de réglage et on produit un signal (BT) de déclenchement si la valeur de seuil est dépassée, on envoie le signal (BT) de déclenchement au générateur de signal (30) de déclencheur, grâce à quoi celui-ci passe d'un mode de fonctionnement normal à un mode de fonctionnement particulier,
- le générateur (30) de signal de déclencheur produit dans le mode de fonctionnement particulier comme signal (T) de déclencheur un signal, qui met le dispositif (27a) de maintien d'échantillonnage monté en amont de l'organe (29) de régleur et le dispositif (27b) de maintien d'échantillonnage monté en aval de l'organe (29) de régleur respectivement dans un fonctionnement d'échantillonnage permanent, dans lequel le signal (e) d'erreur de réglage ou le signal (i_Stell) de régleur est échantillonné à une cadence d'échantillonnage, qui est plus grande que la cadence d'échantillonnage en fonctionnement normal.

2. Procédé suivant la revendication 1, **caractérisé en ce que** l'on exploite le signal (e) d'erreur de réglage à deux fois la fréquence du réseau.

3. Procédé suivant l'une des revendications précédentes, **caractérisé en ce que**

- on somme les tensions des modules (13) partiels en formant un signal somme et/ou on en fait la moyenne en formant un signal (u_SM_Avg) de valeur moyenne et
- on forme le signal (e) d'erreur de réglage par formation d'une différence entre le signal somme et une valeur de consigne de charge rapportée à la somme ou par formation d'une différence entre le signal (u_SM_Avg) de valeur moyenne et une valeur (u_SM_Soll) de consigne de charge rapportée à une valeur moyenne.

4. Procédé suivant l'une des revendications précédentes, **caractérisé en ce que**

- un générateur (30) de signal de déclencheur du régleur (20) d'énergie contrôle les passages par zéro de la tension (u_Anschluss) d'alimentation du réseau (1) d'alimentation en électricité ou d'une tension qui y est proportionnelle et produit un signal (T) de déclencheur à chaque passage par zéro,

- on retarde le signal (T) de déclencheur d'un laps de temps (TZ) donné à l'avance et on forme un signal (Tv) de déclencheur retardé dans le temps,

- un dispositif (27a) de maintien d'échantillonnage du régleur (20) d'énergie échantillonne le signal (e) d'erreur de réglage

- déclenché par le signal (Tv) de déclencheur retardé dans le temps - et émet des valeurs (e_Abtast) d'échantillonnage d'erreur de réglage retardées dans le temps du côté de la sortie et

- on produit le signal (i_Stell_Aus) de réglage en tirant parti des valeurs (e_Abtast) d'échantillonnage d'erreur de réglage retardées dans le temps.

5. Procédé suivant la revendication 4, **caractérisé en ce que**
le laps de temps (TZ) donné à l'avance est un laps de temps (TZ) donné à l'avance de manière fixe.

6. Procédé suivant la revendication 4 ou 5, **caractérisé en ce que**
le laps de temps (TZ) donné à l'avance de manière fixe est tel que l'on produit ou entre dans le dispositif de maintien d'échantillonnage le signal de déclencheur retardé avec une position en phase entre 30° et 60° - rapporté au passage par zéro précédent respectivement de la tension d'alimentation - notamment de 45° ou comprise entre 120° et 150°, notamment de 135°.

7. Procédé suivant l'une des revendications précédentes, **caractérisé en ce que**
le régleur (20) d'énergie détermine soi-même le laps de temps (TZ) donné à l'avance en fonction de paramètres de fonctionnement de l'onduleur et/ou du réseau (1) d'alimentation en électricité.

8. Procédé suivant l'une des revendications précédentes, **caractérisé en ce que**
l'on injecte les valeurs (e_Abtast) d'échantillonnage d'erreur de réglage dans un organe (29) du régleur (20) d'énergie, qui émet un signal (i_Stell) de régleur en fonction des valeurs (e_Abtast) d'échantillonnage d'erreur de réglage appliquées.

9. Procédé suivant la revendication 8, **caractérisé en ce que**
en aval de l'organe (29) de régleur est monté un dispositif (27b) de maintien d'échantillonnage, qui échantillonne le signal (i_Stell) de régleur en formant des valeurs d'échantillonnage de régleur et émet, du côté de la sortie comme ledit signal (i_Stell_Aus) de réglage du régleur (20) d'énergie, la valeur d'échantillonnage de régleur produite respectivement jusqu'à production de la valeur d'échantillonnage de régleur immédiatement suivante.

10. Procédé suivant l'une des revendications précédentes, **caractérisé en ce que**

- on injecte les signaux (T) de déclencheur du générateur (30) de signal de déclencheur dans le dispositif (27b) de maintien d'échantillonnage monté en aval de l'organe (29) de régleur et

- le dispositif (27b) de maintien d'échantillonnage monté en aval de l'organe (29) de régleur échantillonne le signal (i_Stell) de régleur respectivement à l'application d'un signal (T) de déclencheur.

11. Procédé suivant la revendication 10, **caractérisé en ce que**
l'on détermine la valeur de seuil en fonction de paramètres de fonctionnement, notamment en fonction du courant (i_Ist), respectif dans le circuit série, d'une grandeur (u_Stell) de réglage d'un régleur (24) de courant monté en aval du régleur (20) d'énergie et dudit signal (u_SM_Avg) de valeur moyenne.

12. Onduleur, notamment onduleur (100) à plusieurs niveaux, à connecter à un réseau (1) d'alimentation en électricité comprenant au moins un circuit série ayant au moins deux modules (13) partiels montés en série qui comprennent chacun au moins deux éléments (S1-S4) de coupure et un accumulateur d'énergie, notamment un condensateur (19), **caractérisé en ce que**

- l'onduleur a un régleur (20) d'énergie qui, pour la commande de l'état de charge de l'accumulateur d'énergie, produit un signal (i_Stell_Aus) de réglage du côté de la sortie,

- un générateur (30) de signal de déclencheur et un dispositif (27a) de maintien d'échantillonnage du régleur (20) d'énergie sont constitués de manière à ce que le dispositif (27a) de maintien d'échantillonnage exploite un signal (e) d'erreur de réglage, qui indique l'état de charge respectif de l'accumulateur d'énergie ou en est au moins dépendant, avec formation de valeurs (e_Abtast) d'échantillonnage d'erreur de réglage à une cadence, qui est plus petite que le quadruple de la fréquence du réseau (1) d'alimentation en énergie et

- un organe (29) du régleur (20) d'énergie ou un composant monté en aval de l'organe (29) de régleur, notamment un dispositif (27b) de maintien d'échantillonnage monté en aval de l'organe (29) de régleur, produit, comme signal (i_Stell_Aus) de réglage, un signal, qui dépend des valeurs (e_Abtast) d'échantillonnage d'erreur de réglage,

- dans lequel on contrôle le dépassement d'une valeur de seuil par la valeur absolue des valeurs (e_Abbtast) d'échantillonnage d'erreur de réglage et on produit un signal (BT) de déclenchement si la valeur de seuil est dépassée,

- on envoie le signal (BT) de déclenchement au générateur de signal (30) de déclencheur, grâce à quoi celui-ci passe d'un mode de fonctionnement normal à un mode de fonctionnement particulier,

- le générateur (30) de signal de déclencheur produit dans le mode de fonctionnement particulier comme signal (T) de déclencheur un signal, qui met le dispositif (27a) de maintien d'échantillonnage monté en amont de l'organe (29) de régleur et le dispositif (27b) de maintien d'échantillonnage monté en aval de l'organe (29) de régleur respectivement dans un fonctionnement d'échantillonnage permanent, dans lequel le signal (e) d'erreur de réglage ou le signal (i_Stell) de régleur est échantillonné à une cadence d'échantillonnage qui est plus grande que la cadence d'échantillonnage en fonctionnement normal.

13. Onduleur suivant la revendication 12, **caractérisé en ce que**

- le régleur (20) d'énergie a un générateur (30) de signal de déclencheur, qui contrôle les passages par zéro de la tension du réseau (1) d'alimentation en énergie ou d'une tension qui y est proportionnelle et produit à chaque passage par zéro respectivement un signal (T) de déclencheur,

- le régleur (20) d'énergie a un organe (31) de retard, qui retarde les signaux (T) de déclencheur respectivement d'un laps de temps (TZ) donné à l'avance et forme des signaux (Tv) de déclencheur retardés,

- le régleur (20) d'énergie a un dispositif (27a) de maintien d'échantillonnage, qui est alimenté par les signaux (Tv) de déclencheur retardés, échantillonne avec ceux-ci le signal (e) d'erreur de réglage et forme des valeurs (e_Abtast) d'échantillonnage d'erreur de réglage retardées dans le temps,

- un organe (29) de régleur est monté en aval du dispositif (27a) de maintien d'échantillonnage,

- un dispositif (27b) de maintien d'échantillonnage, dénommé dans ce qui suit deuxième dispositif (27b) de maintien d'échantillonnage, est monté en aval de l'organe (29) de régleur,

- le deuxième dispositif (27b) de maintien d'échantillonnage est alimenté en le signal (i_Stell) de régleur de l'organe de régleur et en les signaux (T) de déclencheur du générateur (30) de signal de déclencheur et

- le deuxième dispositif (27a) de maintien d'échantillonnage est conformé de manière à ce qu'il

- échantillonne le signal (i_Stell) de régleur de l'organe de régleur respectivement à l'application d'un signal (T) de déclencheur du générateur (30) de signal de déclencheur avec formation d'une valeur d'échantillonnage de régleur et

- émet, du côté de la sortie comme ledit signal (i_Stell_Aus) de réglage du régleur (20) d'énergie, la valeur d'échantillonnage de régleur produite respectivement jusqu'à obtention du signal (T) de déclencheur immédiatement suivant du générateur (30) de signal de déclencheur.

FIG 1

1

210

200

4 V

A 3

u_Anschluss

2

SW

5

100

FIG 2

FIG 3

FIG 4

FIG 5

FIG 6

FIG 7

FIG 8

i_Ist
i_Soll
u_SM_Soll
u_SM_Ist
u_Anschluss

i_Stell_Aus

u_Stell

S

20
21
22
23
24
25
5

## FIG 9

u_SM_Soll

u_SM_Ist

$$\frac{1}{N} \sum_{k=1}^{N} x_k$$

26

u_SM_Avg

28

e

S&H

27a

e_Abtast

29

i_Stell

S&H

27b

i_Stell_Aus

TV

u_Stell

i_Ist

32

BT

TZ

u_Anschluss

30

T

31

T

20

EP 3 459 165 B1

## FIG 10

u_Anschluss →

40

y → 0 41a

41b BT

TA → 1

MUX

T →

41

30

## FIG 11

x → sign

33

z⁻¹

34

x
x!=y
y

35

40

**FIG 12**

FIG 13

FIG 14

FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012152619 A2
- EP 2725700 A1

- WO 2008086760 A1